Europäisches Patentamt

European Patent Office

Office européen des brevets

(11) Veröffentlichungsnummer : **0 175 867**
**B1**

(12) **EUROPÄISCHE PATENTSCHRIFT**

(45) Veröffentlichungstag der Patentschrift :
**15.03.89**

(51) Int. Cl.⁴ : **F 16 D   3/62**, B 61 C   9/44

(21) Anmeldenummer : **85108926.8**

(22) Anmeldetag : **17.07.85**

(54) **Kardanische Doppelkupplung.**

(30) Priorität : **14.09.84 DE 3433801**
            **19.04.85 DE 3514124**

(43) Veröffentlichungstag der Anmeldung :
**02.04.86 Patentblatt 86/14**

(45) Bekanntmachung des Hinweises auf die Patenterteilung : **15.03.89 Patentblatt 89/11**

(84) Benannte Vertragsstaaten :
**AT BE CH DE FR GB IT LI**

(56) Entgegenhaltungen :
**EP--A-- 0 035 283**
**DE--A-- 2 756 445**
**FR--A--   721 067**
**FR--A-- 1 475 431**
**GB--A--   541 221**
**US--A-- 4 051 784**

(73) Patentinhaber : **Thyssen Industrie AG**
**Am Thyssenhaus 1**
**D-4300 Essen 1 (DE)**

(72) Erfinder : **Piepenbreier, Ernst**
**Wintgenstrasse 15**
**D-4300 Essen 16 (DE)**
Erfinder : **Trost, Josef**
**Altstrasse 25**
**D-4300 Essen 11 (DE)**

(74) Vertreter : **Jung, Hermann L., Dipl.-Chem.**
**Postfach 1728 Augusta-Allee 10**
**D-6380 Bad Homburg v.d.H. (DE)**

EP 0 175 867 B1

**Beschreibung**

Die Erfindung bezieht sich auf eine kardanische Doppelkupplung zwischen einer Hohlwelle und einer durch diese gehenden Welle eines Schienenfahrzeuges bestehend aus einer hohlstumpfförmigen, die Welle mit Spiel umschließenden Zwischenwelle sowie an deren Enden angeordneten elastischen und gelenkigen Kupplungen, deren einander zugekehrten Hälften eine gemeinsame Nabe in Form der Zwischenwelle enthalten und deren Außenhälften der Hohlwelle bzw. der Welle angepaßten Naben besitzen, wobei jede der Kupplungen von ihren Naben ausgehende und in einer zu den Wellen senkrechten, gemeinsamen Ebene abwechselnd hintereinander liegende Arme aufweist, an deren Enden jeweils zwei wellenparallele Bolzen in Drehrichtung nebeneinander angeordnet sind, von denen zumindest an einer der Kupplungsseiten je ein sphärisch bewegbarer Lenker zu den benachbarten Armen ausgeht.

Eine derartige Kupplung ist durch die DE-A-2 716 115 (US-A-4 051 784) bekannt. Charakteristisch ist allerdings dort, daß die Lenker, die laschenartig sind und zwei benachbarte Bolzen der zusammenarbeitenden Kupplungshälften miteinander verbinden, in sich starr sind. Die Kraftübertragung zwischen den Lenkern und den Bolzen erfolgt über ballig ausgebildete Gummilager, die eine sphärische Auslenkung der Lenker ermöglichen. Die Grenzen der Auslenkbarkeit sind durch die Gummischicht dieser sphärischen Lager begrenzt. Da die Gummischicht relativ dünn ist und das Antriebsmoment als Umfangskraft übertragen muß, ist die mögliche Auswinkelung begrenzt. Hinzu kommt, dass infolge der geringen Gummimasse die Rückstellkräfte mit der Auswinkelung unproportional anwachsen.

Der Erfindung liegt die Aufgabe zugrunde, die elastische Auswinkelung einer Doppelkupplung der eingangs genannten Art zu vergrössern und zugleich die Rückstellkräfte zu verringern. Die Kupplung, insbesondere aber der einzelne Lenker, soll geeignet sein, ihre Verdrehsteifigkeit mit einfachen Mitteln beeinflussen zu lassen. Auch eine Vorspannung der Lenker soll einfach handhabbar und ohne grossen Aufwand beherrschbar sein.

Die Erfindung besteht darin, dass die Lenker aus einem gummiähnlichen Material bestehen, in zwei nebeneinander liegenden Reihen die Arme einschliessen, ausser ihrer Bewegbarkeit senkrecht zu den Wellen fest an den Bolzen eingespannt sind und der Abstand zwischen den zur Aufnahme der Bolzen vorgesehenen Einsätze in den Bohrungen der Lenker im nicht eingebauten Zustand kleiner ist als der Abstand zwischen benachbarten Bolzen und jeder Lenker an den Enden eine den Bolzen umschliessende Hülse aufweist, deren Berührungsflächen einerseits zwischen der Hülse und dem Bolzen konisch und andererseits zwischen der Hülse und dem Lenker zylindrisch ausgebildet sind.

Laschenartige elastische Lenker sind zwar aus dem Kupplungs-Atlas, 1975, von A. Schalitz, S. 71, Bild 3.2.6-23, bekannt. Sie sind jedoch für Kupplungen von Schienenfahrzeuge nicht geeignet.

Die Aufteilung von Kupplungslenkern in zwei nebeneinander liegende, die Kupplungsarme einschließende Reihen ist z. B. aus der DE-A-2 756 445 bekannt.

Die sich aus den erfindungsgemässen Merkmalen der Doppelkupplung herleitbaren Vorteile basieren auf der Kombination der weiteren in Anspruch 1 aufgeführten Merkmale mit den für sich bekannten Merkmalen : Verwendung eines gummiähnlichen Materials für die Lenker und deren Aufteilung in zwei Reihen, welche gegenüber einer einreihigen Ausführung nach GB-A-541 221 oder US-A-4 051 781 eine grösstmögliche Kraftübertragung ergibt, aber den Widerstand gegen Verwindung verringert, sodass die kardanische Bewegung der Kupplung, d. h. ihre Auswinkelung, gefördert wird und zugleich die Rückstellkräfte herabgesetzt werden. Begünstigt wird dies noch dadurch, dass die zweireihige Lenkeranordnung die Kupplung gleichmässig belasten und keine schwellenden Umlaufkräfte entstehen lässt. Die Einsetzbarkeit bei hohen Drehzahlen ist somit problemlos. Die Lenker werden dank ihrer Bewegbarkeit senkrecht zu den Wellen bei jeder Betriebssituation überwiegend auf Zug beansprucht.

Das gummiähnliche Material lässt ausserdem die Möglichkeit offen, die Elastizität der Kupplung, d. h. der Lenker, z. B. durch Zusatzstoffe einfach zu ändern oder ihre Vorspannbarkeit durch einfache Mittel zu bewerkstelligen.

Es hat sich als besonders zweckmässig erwiesen, die Doppelkupplung zum Verbinden einer in einem Drehgestell oder Rahmen gelagerten Achse eines Achsantriebes für Schienenfahrzeuge mit einer die Achse mit Spiel umschließenden, abtreibenden Hohlwelle eines Getriebes einzusetzen, das an der Stirnseite eines in Fahrtrichtung liegenden Elektromotors angeflanscht und zusammen mit dem letzteren im Drehgestell oder Rahmen befestigt ist.

Im folgenden wird die Erfindung anhand von in den Zeichnungen schematisch dargestellten Ausführungsbeispielen näher erläutert. Es zeigen

Fig. 1 eine Doppelkupplung in Achsrichtung gesehen, zum Teil im Schnitt nach der Linie I-I der Fig. 2,

Fig. 2 einen Schnitt nach der Linie II-II der Fig. 1,

Fig. 3 einen Lenker der Doppelkupplung in Seitenansicht während der Montage in vergrößertem Maßstab und

Fig. 4 einen Doppelachsantrieb teilweise im Schnitt von oben gesehen und

Fig. 5 teilweise eine andere Ausführung des Gegenstandes nach Fig. 2.

Mit 1 ist eine kardanische Doppelkupplung bezeichnet, die außer einer Winkelabweichung der mit ihr verbundenen Wellen auch einen paral-

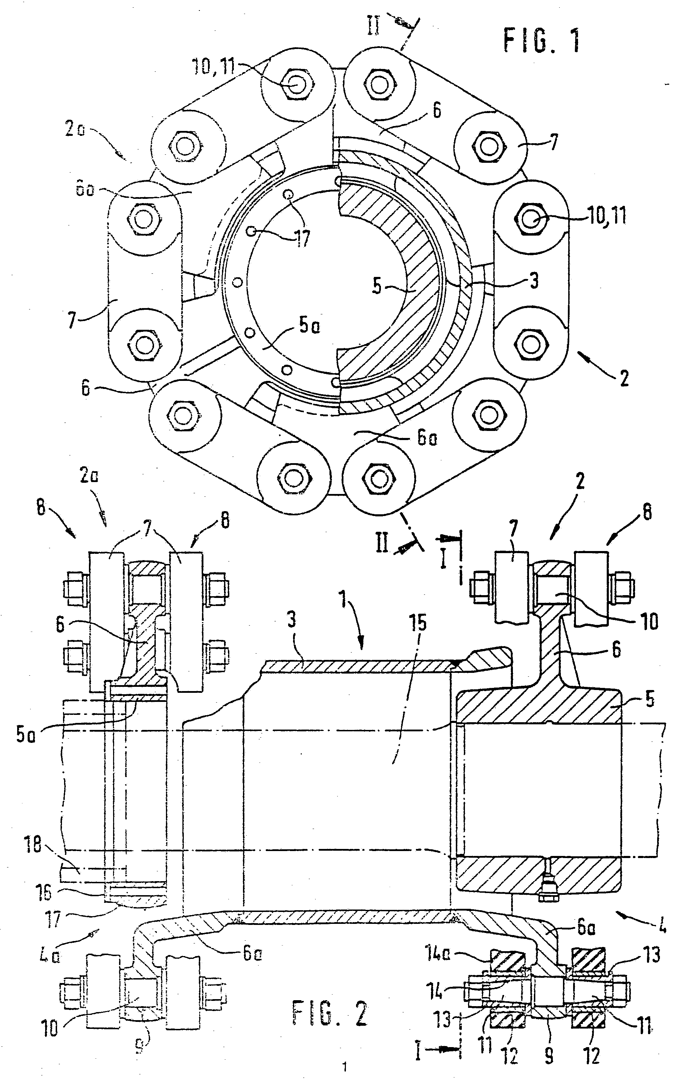

lelen Achsversatz gestattet. Die Doppelkupplung 1 besteht nach den Figuren 1 und 2 aus zwei elastischen und gelenkigen Kupplungen 2 und 2a, die miteinander durch eine hohlstumpfförmige Zwischenwelle 3 verbunden sind. Jede der Kupplungen 2 bzw. 2a enthält eine Außenhälfte 4 bzw. 4a mit einer Nabe 5 bzw. 5a, von der strahlenförmig mehrere Arme 6 ausgehen (dargestellt sind je drei). Die Innenhälften werden mit Hilfe der Zwischenwelle 3 gebildet und gehen insofern ineinander über. Auch die Zwischenwelle 3 enthält Arme 6a, die an den Wellenenden vorgesehen sind und derart zwischen die Arme 6 der Naben 5 und 5a greifen, das sie mit den letzteren jeweils in einer zu den Naben senkrechten Ebene liegen. Die Arme 6 und 6a derselben Ebene sind an den Enden durch elastische Lenker oder auch Laschen 7 miteinander verbunden, so daß die Doppelkupplung 1 in dem Bereich der Naben 5 und 5a insgesamt zwei Gelenkebenen aufweist, um die herum kardanische Bewegungen nennenswerter Ausmaße stattfinden können.

Die Lenker 7 sind in jeder Gelenkebene beiderseits der Arme 6 und 6a, also jeweils in zwei Reihen 8 angeordnet. Dazu dienen in Bohrungen 9 eingesetzte ortsfeste Bolzen 10, die in jedem Arm 6 und 6a auf einem gemeinsamen Kreis paarweise nebeneinander sitzen, mit den Armen vereint sind und mit ihnen beiderseits abstehenden konischen Zapfen 11 die elastischen Lenker 7 formschlüssig jedoch unter Gelenkigkeit in der zu den Bolzen 10 senkrechten Ebene festhalten. Die Lenker 7 verbinden stets zwei benachbarte Bolzen 10, von denen der eine in dem Arm 6 und der andere in dem Arm 6a sitzt.

Die Lenker 7 sind aus Gummi mit schlingenförmig einvulkanisierten, glasfaserverstärkten Kunststoffäden hergestellt. Durch Anzahl und Form der Schlingen werden die Drehelastizität der Kupplungsverbindung und die Verdrehelastizität der Lenker und somit der Auswinkelungsgrad der Doppelkupplung den Erfordernissen angepaßt.

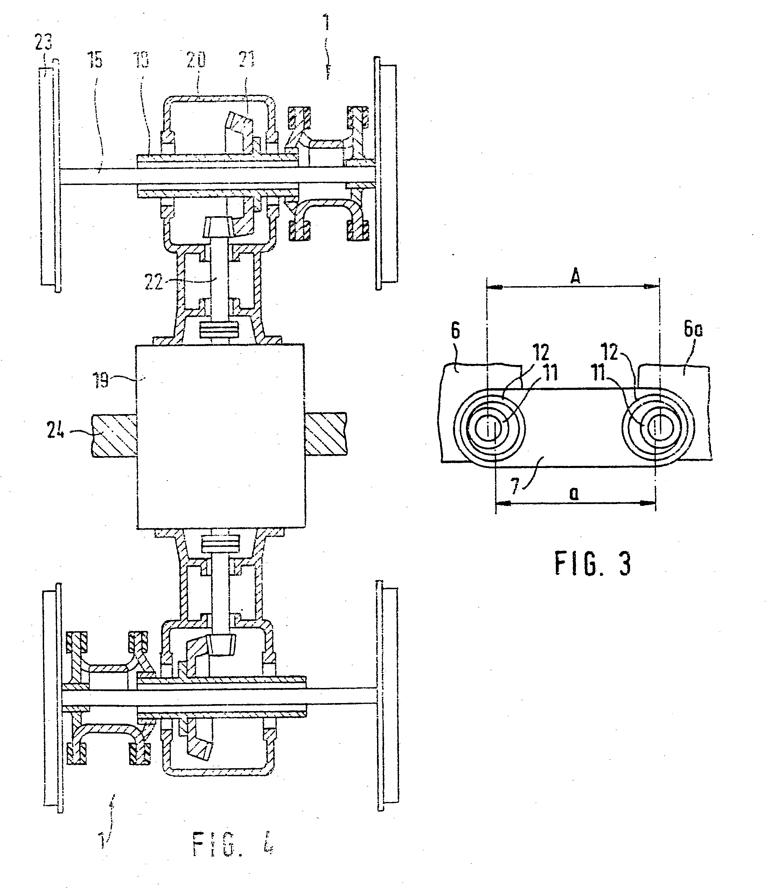

Die Lenkerenden bzw. dortige metallische Einsätze 12 weisen für die Aufnahme der Zapfen 11 Bohrungen auf, in denen eine Hülse 13 satt sitzt, und zwar mit einer inneren, konischen Berührungsfläche 14 zu dem Zapfen 11 hin. Die Berührungsfläche 14a zwischen der Hülse 13 und dem Einsatz 12 ist zylindrisch. Wenn nun gemäß Fig. 3 ein Lenker 7 eingesetzt wird, dessen Stichmaß a zwischen den Einsätzen 12 kleiner ist als der Abstand A zwischen zwei benachbarten Zapfen 11, dann wird beim Eindrücken der Hülsen 13 (nicht gezeichnet) der Lenker auf das Maß A auseinandergezogen und somit vorteilhaft unter Vorspannung gesetzt.

Während die Nabe 5 auf einer massiven Welle 15 sitzt, ist die Nabe 5a mittels einer Stirnverzahnung 16 und durch Durchgangslöcher 17 gesteckter Schrauben mit einer Hohlwelle 18 verbunden.

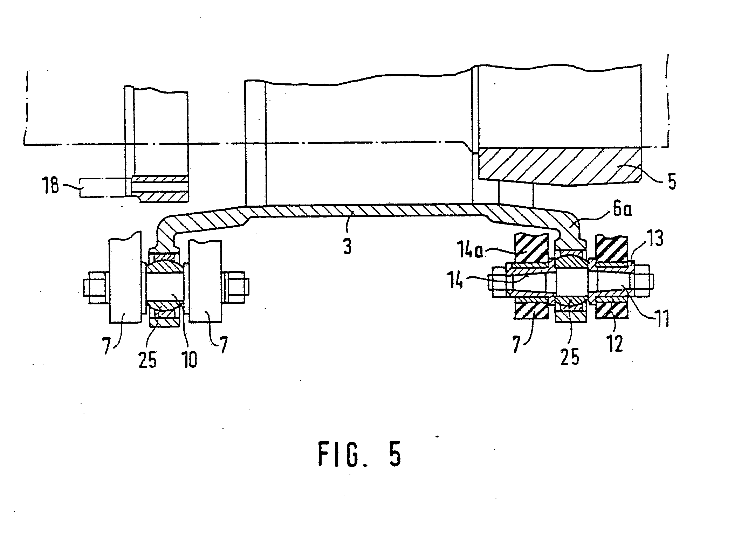

Fig. 4 zeigt die Anwendung der Doppelkupplung 1 in einem Doppelachsantrieb für Schienenfahrzeuge. Mit 19 ist ein längs zur Fahrtrichtung liegender Elektromotor bezeichnet, an dessen Stirnseite je ein Winkelgetriebe 20 angeflanscht ist, welches mit Hilfe von Kegelrädern 21 und 22 die Hohlwellen 18 antreibt, die die Welle oder auch Achse 15 der Laufräder 23 mit Spiel umgeben. Der Elektromotor 19 ist zusammen mit den Winkelgetrieben 20 durch elastische Aufhängungen 24 mit dem Drehgestellrahmen verbunden. Jede Hohlwelle 18 ist an einem Ende mit der zugehörigen Achse 15 über die Doppelkupplung 1 verbunden, wie vorstehend beschrieben. In einen derartigen Antrieb wird die Doppelkupplung 1 bevorzugt eingesetzt.

Bei der in Fig. 5 dargestellten Ausführung sind die Bolzen 10 in Universal-Gelenklagern 25 an den Armen 6, 6a gelagert. Da die Gelenkmitte in bezug auf die Arme unverändert bleibt, sind auch diese Bolzen 10 als ortsfest anzusehen. Im übrigen sind, wie auch bei den anderen Ausführungen, die Lenker 7 über den Umfang der Arme 6, 6a symmetrisch und paarweise angeordnet, wobei insgesamt sechs Lenkerpaare vorgesehen sind.

Die paarweise Anordnung der Lenker 7 ist derart, daß immer drei Paare der Lenker 7 je nach Kraftrichtung auf Zug beansprucht werden. Damit ergibt sich eine Dreieckanordnung der Lenker 7, die eine statisch und dynamisch bestimmte Fixierung der Kardan-Hohlwelle 3 gewährleistet. Bei einer Verlagerung der Lenker 7, ob parallel und/oder winklig, stellen sich die Bolzen 10 in ihren Gelenklagern 25 so ein, daß die beiden links und rechts vom Gelenklager 25 angeordneten Lenker stets die gleiche Zugkraft aufweisen. Damit verschwinden die Rückstellkräfte dieser Kupplung, wenn die Reibung in den Gelenklagern 25 nicht berücksichtigt wird. Die erforderliche Drehelastizität der gesamten Kupplung wird durch die elastischen Lenker 7 bestimmt.

Durch die vorzugsweise wartungsfreien Gelenklager 25 ergibt sich theoretisch eine rückstellkraftfreie Verlagerungsmöglichkeit der Lenker 7 bei sehr großen Auslenkwinkeln. Dieser Auslenkwinkel stellt sich immer so ein, daß ein Kraftausgleich zwischen den beiden Lenkern 7 eines Lenkerpaares gewährleistet ist. Je nach Lastrichtung sind immer nur drei Lenkerpaare beansprucht, da die Lenker 7 nur von Zugkräften beaufschlagt werden. Die Drehelastizität der gesamten Kupplung kann dem jeweiligen Bedarf angepaßt werden, ohne daß auf Rückstellkräfte und absoluten Versatz Einfluß genommen werden muß. Durch die Anordnung von je nach Lastrichtung jeweils drei wirksamen Lenkerpaaren in jeder Ebene ist die kardanische Hohlwelle 18 statisch und dynamisch zentriert.

Bezugszeichenliste

| 1 | Doppelkupplung | a | Abstand |
|---|---|---|---|
| 2,2a | Kupplung | A | Abstand |
| 3 | Zwischenwelle, Nabe | | |
| 4,4a | Außenhälfte | | |
| 5,5a | Nabe | | |
| 6,6a | Arm | | |
| 7 | Lenker, Lasche | | |
| 8 | Reihe | | |
| 9 | Bohrung | | |

| 10 | Bolzen |
|----|--------|
| 11 | Zapfen |
| 12 | Einsatz |
| 13 | Hülse |
| 14 | Berührungsfläche, konisch |
| 14a | Berührungsfläche, zylindrisch |
| 15 | Welle, Achse |
| 16 | Stirnverzahnung |
| 17 | Durchgangsloch |
| 18 | Hohlwelle |
| 19 | Elektromotor |
| 20 | Winkelgetriebe |
| 21 | Kegelrad |
| 22 | Kegelrad |
| 23 | Laufrad |
| 24 | Aufhängung |
| 25 | Gelenklager |

**Patentansprüche**

1. Kardanische Doppelkupplung (1) zwischen einer Hohlwelle (18) und einer durch diese gehenden Welle (15) eines Schienenfahrzeugs bestehend aus einer hohlstumpfförmigen, die Welle mit Spiel umschliessenden Zwischenwelle (3) sowie an deren Enden angeordneten elastischen und gelenkigen Kupplungen (2, 2a), deren einander zugekehrte Hälften eine gemeinsame Nabe in Form der Zwischenwelle enthalten und deren Aussenhälften (4, 4a) der Hohlwelle bzw. der Welle angepasste Naben (5, 5a) besitzen, wobei jede der Kupplungen von ihren Naben (5, 5a bzw. 3) ausgehende und in einer zu den Wellen (15, 18) senkrechten, gemeinsamen Ebene abwechselnd hintereinander liegende Arme (6, 6a) aufweist, an deren Enden jeweils zwei wellenparallele Bolzen (10) in Drehrichtung nebeneinander angeordnet sind, von denen zumindest an einer der Kupplungsseiten je ein sphärisch bewegbarer Lenker (7) zu den benachbarten Armen (6 oder 6a) ausgeht, dadurch gekennzeichnet, dass die Lenker (7) aus einem gummiähnlichem Material bestehen, in zwei nebeneinander liegenden Reihen (8) die Arme (6, 6a) einschliessen, ausser ihrer Bewegbarkeit senkrecht zu den Wellen (15, 18) fest an den Bolzen (10) eingespannt sind und der Abstand (a) zwischen den zur Aufnahme der Bolzen (10) vorgesehenen Einsätze (12) in den Bohrungen (9) der Lenker (7) im nicht eingebauten Zustand kleiner ist als der Abstand (A) zwischen benachbarten Bolzen (10) und jeder Lenker (7) an den Enden eine den Bolzen (10) umschliessende Hülse (13) aufweist, deren Berührungsflächen (14, 14a) einerseits zwischen der Hülse und dem Bolzen konisch und andererseits zwischen der Hülse und dem Lenker zylindrisch ausgebildet sind.

2. Doppelkupplung nach Anspruch 1 zum Verbinden einer in einem Drehgestell oder Rahmen gelagerten Achse (15) eines Achsantriebes für Schienenfahrzeuge mit einer die Achse mit Spiel umschließenden, abtreibenden Hohlwelle (18) eines Getriebes (20), das an der Stirnseite eines in Fahrtrichtung liegenden Elektromotors (19) angeflanscht und zusammen mit dem letzteren im Drehgestell oder Rahmen befestigt ist.

3. Doppelkupplung nach Anspruch 1 oder 2, dadurch gekennzeichnet, daß die Bolzen (10) gelenkig an den Armen (6, 6a) gelagert sind.

4. Doppelkupplung nach einem der Ansprüche 1 bis 3, dadurch gekennzeichnet, daß die Bolzen (10) in Universal-Gelenklagern (25) gelagert sind.

5. Doppelkupplung nach einem der Ansprüche 1 bis 4, dadurch gekennzeichnet, daß die Bolzen (10) mit den Armen (6, 6a) fest vereint sind.

6. Doppelkupplung nach einem der Ansprüche 1 bis 5, dadurch gekennzeichnet, daß die Lenker (7) über dem Umfang der Arme (6, 6a) symmetrisch und paarweise angeordnet sind.

7. Doppelkupplung nach Anspruch 6, dadurch gekennzeichnet, daß sechs Lenkerpaare vorgesehen sind.

**Claims**

1. Double coupling (1) with a cardan joint, between a hollow shaft (18) and a shaft (15), passing through the latter, of a rail vehicle, comprising an intermediate shaft (3) which has the form of a hollow stub and surrounds the shaft with play, and flexible and articulated couplings (2, 2a), which are arranged at the ends of said intermediate shaft and the mutually facing halves of which enclose a common hub in the form of the intermediate shaft and the outer halves (4, 4a) of which have hubs (5, 5a) matched to the hollow shaft and the shaft respectively, each of the couplings having arms (6, 6a) which start from their hubs (5, 5a and 3 respectively) and lie alternately one behind the other in a common plane perpendicular to the shafts (15, 18) and at the ends of which in each case two pins (10), parallel to the shafts, are arranged next to one another in the direction of rotation, from which, at least at one of the sides of the couplings, there proceeds in each case one spherically movable guide member (7) to the neighbouring arms (6 or 6a), characterized in that the guide members (7) consist of a rubber-like material, enclose the arms (6, 6a) in two mutually adjacent rows (8) and are, apart from their ability to be moved perpendicular to the shafts (15, 18), firmly clamped on the pins (10) and the spacing (a) between the inserts (12) provided for accommodating the pins (10) in the bores (9) of the guide members (7) is smaller in the noninstalled condition than the spacing (A) between the neighbouring pins (10), and each guide member (7) has, at the ends, a sleeve (13) surrounding the pins (10) and whose contact surfaces (14, 14a) between the sleeve and the pin, on the one hand, are of conical design and whose contact surfaces between the sleeve and the guide member, on the other hand, are of cylindrical design.

2. Double coupling according to Claim 1 for connecting an axle (15) of an axle drive for rail vehicles, said axle being mounted in a bogie or frame, to a driving hollow shaft (18) of a transmission (20), said hollow shaft surrounding the axle with play, said transmission being flanged on the end face of an electric motor (19) lying in the direction of travel and being secured in the bogie or frame together with the latter.

3. Double coupling according to Claim 1 or 2, characterized in that the pins (10) are mounted in articulated fashion on the arms (6, 6a).

4. Double coupling according to one of Claims 1 to 3, characterized in that the pins (10) are mounted in universal pivot bearings (25).

5. Double coupling according to one of Claims 1 to 4, characterized in that the pins (10) are firmly united to the arms (6, 6a).

6. Double coupling according to one of Claims 1 to 5, characterized in that the guide members (7) are arranged symmetrically and in pairs over the periphery of the arms (6, 6a).

7. Double coupling according to Claim 6, characterized in that six guide member pairs are provided.

**Revendications**

1. Accouplement double à cardan (1) reliant un arbre creux (18) et l'arbre (15), traversant l'arbre creux (18), d'un véhicule sur rails, se composant d'un arbre intercalaire (3) enveloppant l'arbre avec du jeu, ainsi que d'accouplements élastiques et articulés (2, 2a) disposés aux extrémités de l'arbre, dont les moitiés d'accouplement se faisant face présentent un moyeu commun en forme de cet arbre intercalaire, et dont les moitiés tournées vers l'extérieur (4, 4a) présentent des moyeux (5, 5a) adaptés à l'arbre creux et à l'arbre, chacun des accouplements présentant des bras (6, 6a) partant de ces moyeux (5, 5a et 3) et placés en alternance les uns derrière les autres sur un même plan perpendiculaire aux arbres (15, 18), deux boulons (10) parallèles aux arbres étant disposés à l'extrémité de ces bras dans le sens de rotation, d'où (10) part, au moins de l'un des côtés des accouplements, un guidon (7) sphérique mobile constitué d'un matériau caoutchouté, pour aboutir aux arbres voisins (6 ou 6a), caractérisé en ce que les guidons (7) enveloppent les bras (6, 6a) entre deux rangées (8) côte à côte, qu'ils sont fermement fixés aux boulons (10) et ne sont mobiles que verticalement par rapport aux arbres (15, 18), et que la distance (a) entre les inserts (12) prévus comme logements des boulons (10), dans les alésages (9) des guidons (7) est inférieure, à l'état non monté, à la distance (A) entre boulons voisins (10), et que chaque guidon (7) présente aux extrémités une douille (13) entourant le boulon (10), les surfaces de contact (14, 14a) de celle-ci (13) ayant d'une part une forme conique entre la douille et le boulon, et d'autre part une forme cylindrique entre la douille et le guidon.

2. Accouplement à double cardan selon revendication 1, permettant de relier l'axe (15), monté dans un bogie ou un châssis, du mécanisme d'entraînement de véhicules sur roue, avec l'arbre creux (18), enveloppant l'axe avec du jeu, d'une boîte d'engrenages (20), laquelle boîte est fixée par flasque contre un moteur électrique (19) disposé dans le sens de la marche, et est fixée solidairement de ce dernier dans le bogie ou le châssis.

3. Accouplement à double cardan selon revendication 1 ou 2, caractérisé en ce que les boulons (10) s'appuient contre les bras (6, 6a) tout en étant articulables.

4. Accouplement à double cardan selon l'une des revendications 1 à 3, caractérisé en ce que les boulons (10) s'appuient sur des articulations à rotules universelles (25).

5. Accouplement à double cardan selon l'une des revendications 1 à 4, caractérisé en ce que les boulons (10) sont rigidement unis aux bras (6, 6a).

6. Accouplement à double cardan selon l'une des revendications 1 à 5, caractérisé en ce que les guidons (7) sont disposés symétriquement et par paires sur le pourtour des bras (6, 6a).

7. Accouplement à double cardan selon revendication 6, caractérisé en ce qu'il est prévu six paires de guidons.

FIG. 1

FIG. 2

FIG. 4

FIG. 3

FIG. 5